# EUROPÄISCHE PATENTSCHRIFT

(11) **EP 0 973 592 B1**
(45) Veröffentlichungstag und Bekanntmachung des Hinweises auf die Patenterteilung: **07.08.2002**
(21) Anmeldenummer: 98913737.7
(22) Anmeldetag: 27.03.1998
(51) Int. Cl.: B01D 11/04

(54) **MEHRPHASEN-EXTRAKTOR MIT WASCHKAMMER**
MULTIPHASE EXTRACTOR WITH A WASH CHAMBER
EXTRACTEUR A PHASES MULTIPLES MUNI D'UNE CHAMBRE DE LAVAGE

(30) Priorität: 09.04.1997 DE 19714579
(43) Veröffentlichungstag der Anmeldung: 26.01.2000
(73) Patentinhaber: Bayer Aktiengesellschaft, 51368 Leverkusen (DE)
(72) Erfinder: BÄCKER, Werner, D-51688 Wipperfürth (DE); KOSTANIAN, Artak Eranosovich, D-51381 Leverkusen (DE)
(86) Internationale Anmeldenummer: EP9801812
(87) Internationale Veröffentlichungsnummer: WO9845014

(56) Entgegenhaltungen:
- US-A- 4 083 758
- DATABASE WPI Section Ch, Week 9806 Derwent Publications Ltd., London, GB; Class D16, AN 98-061324 XP002071996 & RU 2 080 162 C (NITROGEN IND ORG SYNTHESIS PRODUCTS INST) in der Anmeldung erwähnt

## Beschreibung

Die Erfindung geht aus von einem Mehrphasen-Extraktor mit einer Extraktions- und einer Reextraktionskammer, die in ihrem oberen und unteren Teil durch Verbindungskanäle verbunden sind, und mit Verteilungsvorrichtungen und Stutzen für die Zuführung und Abführung einer Abgeberphase und einer Aufnehmerphase ausgestattet sind.

Ein solcher Mehrphasen-Extraktor kann in chemischen, hydrometalluraischen, mikrobiologischen und anderen Industriezweigen zur Trennung, Extraktion, Konzentration und Reinigung von Stoffen angewendet werden.

Vom technischen Standpunkt, sowie vom erreichbaren Effekt her kommt der in der Russischen Patentanmeldung Nr. 94-015776/26 beschriebene dreiphasige Extraktor, welcher aus einer mit der kontinuierlichen Phase (Flüssig-Membran) gefüllten Extraktions- und Reextraktionskammer besteht, den bekannten Apparaten am nächsten. Die Kammern besitzen Vorrichtungen für die Dispergierung der jeweiligen Phase und sind miteinander durch Überläufe für die Zirkulation der kontinuierlichen Phase verbunden. Die Überläufe sind in Form von Verbindungskanälen oder - röhren ausgeführt, welche den oberen und unteren Teil der Kammer jeweils miteinander verbinden. Der Extraktor ist mit Stutzen für die Zu- und Abführung der ersten und zweiten dispergierten Phase versehen. Die erste zu dispergierende Phase, welche die Ausgangslösung bzw. die Abgeberphase ist und den abzutrennenden Stoff enthält und die zweite zu dispergierende Phase bzw. die Aufnehmerphase werden jeweils in der entsprechenden Kammer mittels einer Dispergier- oder Verteilervorrichtung in Tröpfchen zerteilt, die sich als Tropfenschwarm durch die kontinuierliche Phase bewegen. Auf Grund des Dichteunterschiedes der Dispersionen in der ersten und zweiten Kammer erfolgt eine Zirkulation der kontinuierlichen Phase durch die oberen und unteren Überläufe, so daß ein Übergang des extrahierten Stoffes aus einer Kammer in die andere und aus der Abseberphase in die Aufnehmerphase erfolgt. In der ersten Kammer findet also eine Extraktion mit der kontinuierlichen Phase als Extraktionsmittel und in der zweiten Kammer eine Reextraktion des abgetrennten Stoffs mit der Aufnehmerphase als Reextraktionsmittel statt.

Der Erfindung liegt die Aufgabe zugrunde, durch eine Modifizierung des Mehrphasenextraktors weitere Anwendunasmöglichkeiten zu erschließen, bei denen Extraktions- und Reextraktionsprozesse mit Waschprozessen gekoppelt in einem einzigen Apparat durchgeführt werden können. Insbesondere soll dabei soll auch eine Wäsche des Extraktionsmittels ermöglicht werden.

Diese Aufgabe wird bei dem eingangs beschriebenen Mehrphasenextraktor erfindungsgemäß dadurch gelöst, daß die Extraktions- und die Reextraktionskammer über eine dazwischen geschaltete Waschkammer miteinander in Verbindung stehen.

Gemäß einer bevorzugten Ausführung der Erfindung sind die Extraktions-, die Reextraktions- und die Waschkammer mit Separationszonen ausgestattet.

Gemäß einer bevorzugten Ausführung ist der obere Teil der Extraktionskammer unmittelbar mit dem oberen Teil der Reextraktionskammer verbunden.

Alternativ kann auch der obere Teil der Extraktionskammer unmittelbar mit dem unteren Teil der Reextraktionskammer verbunden sein.

Eine weitere Alternative besteht darin, daß der untere Teil der Extraktionskammer unmittelbar mit dem unteren Teil der Reextraktionskammer verbunden ist.

Eine Weiterentwicklung der Erfindung ist dadurch gekennzeichnet, daß die Extraktionskammer und die Reextraktionskammer zusammen mit der Waschkammer eine Trennstufe bilden und eine Reihe solcher Stufen in Form einer Kaskade hintereinander geschaltet sind.

Die Einbindung von Waschkammern zwischen der Extraktions- und Reextraktionskammer erlaubt die Durchführung von gekoppelten Extraktions-, Wasch-, und Reextraktionsprozessen in ein und demselben Apparat.

Die verschiedenartigen Verbindungen zwischen Extraktions- und Reextraktionskammer schaffen die Voraussetzungen für die Realisierung verschiedener technologischer Varianten des Trennprozesses (Gleich-, oder Gegenstromführung des Extraktionsmittels mit der Abgeber-, Wasch- und Aufnehmerphase),

Die kaskadenartige Hintereinanderschaltung von mehreren Trennstufen, die jeweils aus einer Extraktions-, Wasch- und Reextraktionskammer bestehen, erlaubt die Durchführung von mehrstufigen Stofftrennungsprozessen im Mehrphasen-Extraktor.

In Figur 1 - 7 sind schematisch verschiedene Ausführungsvarianten des erfindungsgemäßen Mehrphasen-Extraktors zur Durchführung von gekoppelten Extraktions-, Wasch- und Reextraktionsprozessen dargestellt.

Es zeigen:
- Fig. 1 - 6: verschiedene Ausführungsformen von einstufigen Extraktoren
- Fig. 7: einen mehrstufigen Mehrphasenextraktor

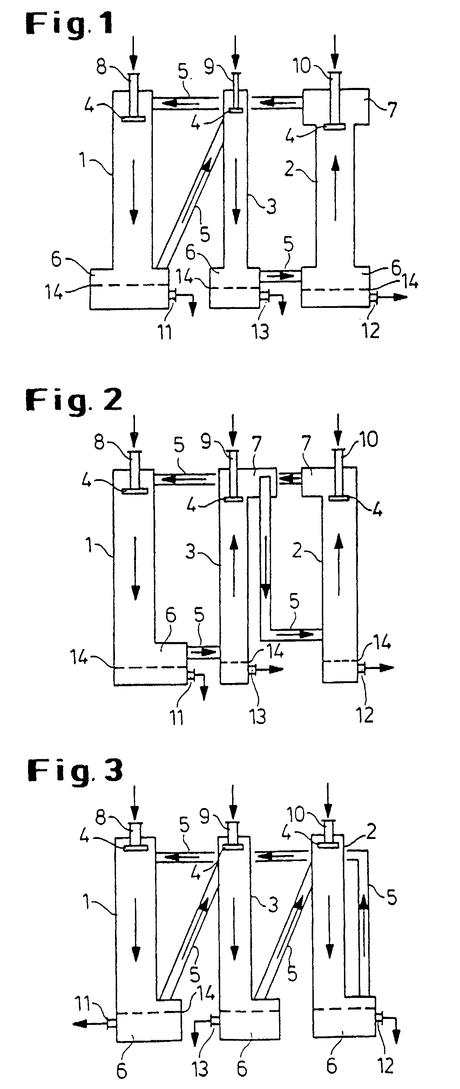

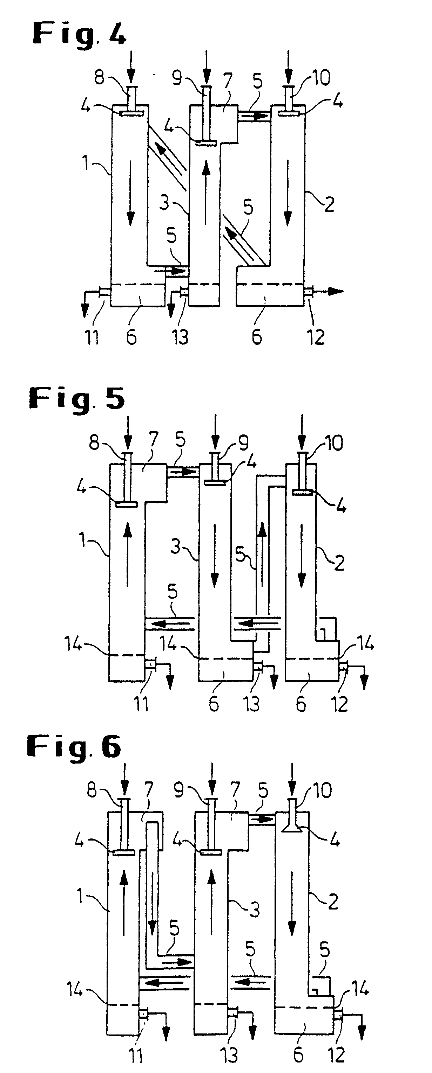

Gemäß Fig. 1 - 6 besteht der Mehrphasenextraktor grundsätzlich aus einer Extraktionskammer 1, einer Reextraktionskammer 2 und einer Waschkammer 3, die zwischen den beiden Kammern 1 und 2 angeordnet ist. Gemäß Fig. 1 und 2 sind die oberen Teile und gemäß Fig. 5 und 6 die unteren Teile der Extraktions- (1) und Reextraktionskammer 2 durch das außen um die Waschkammer 3 herumgeführte Verbindungsrohr 5 miteinander unmittelbar verbunden. An den Eingangsöffnungen der Verbindungsrohre 5 sind Separationszonen 6 in Form einer Querschnittserweiterung der Kammern 1,2,3 vorgesehen. Die als Abscheidekammern wirkenden Separationszonen verhindern das Mitreißen von Tröpfchen durch den zirkulierenden Strom der kontinuierlichen Phase von einer Kammer in die andere.

Der Kammer 1 wird über den Stutzen 8 eine Abgeberphase, der Kammer 2 über den Stutzen 10 eine Aufnehmerphase und der Kammer 3 über den Stutzen 9 eine Waschflüssigkeit (Waschphase) zugeführt. Zur Dispergierung der Phasen sind am Ende der Stutzen Verteilervorrichtungen 4 angebracht. Die Waschkammer 3 weist ebenfalls eine Separationszone 6 auf. Dabei kann der untere Teil der Extraktionskammer 1 mit dem oberen (Fig. 1) oder unteren (Fig. 2) Teil der Waschkammer 3 verbunden sein. Im Extraktor nach Fig. 1 wird das Extraktionsmittel im Gegenstrom mit der Aufnehmerphase und im Gleichstrom mit der Abgeber- und Waschphase geführt. Dagegen wird im Extraktor nach Fig. 2 das Extraktionsmittel im Gegenstrom mit der Waschphase und im Gleichstrom mit der Aufnehmer- und Abgeberphase geführt.

In Fig. 3 und 4 sind Ausführungvarianten des Mehrphasen-Extraktors dargestellt, bei welchen der obere Teil der ersten Kammer 1 (Extraktionskammer) unmittelbar mit dem unteren Teil der zweiten Kammer 2 (Reextraktionskammer) verbunden ist, wobei das Verbindungsrohr 5 wieder hinter der Waschkammer 3 vorbeigeführt ist.

Die Ausgangslösung (Abgeberphase) wird wie bei den oben beschriebenen Ausführungen über die Stutzen 8 in die Extraktionskammer 1 aufgegeben. Der zu extrahierende Stoff wird durch die kontinuierliche Phase (Extraktionsmittel) extrahiert. Die Extrakt-Phase (d.i. die mit dem extrahierten Stoffe beladene kontinuierliche Phase) läuft über das Verbindungsrohr 5 in die Waschkammer 3 über, wo sie durch das über den Stutzen 9 eingespeiste Waschmittel gewaschen wird. Aus der Waschkammer 3 gelangt die gewaschene Extrakt-Phase in die Reextraktionskammer 2, wo die Reextraktion durch die Aufnehmerphase erfolgt. Beim Übergang von einer Kammer in die andere strömt die kontinuierliche Phase durch die Separationszonen 6 und 7 in den Kammern 1, 2 und 3, wodurch evtl. von der Strömung mitgerissene Tröpfchen der Abgeber-, Wasch- oder Aufnehmerphase sich abscheiden. Die Abgeber-, Wasch- und Aufnehmerphase werden über die Stutzen 11, 13 und 12 aus den Kammern 1, 2 und 3 abgeführt.

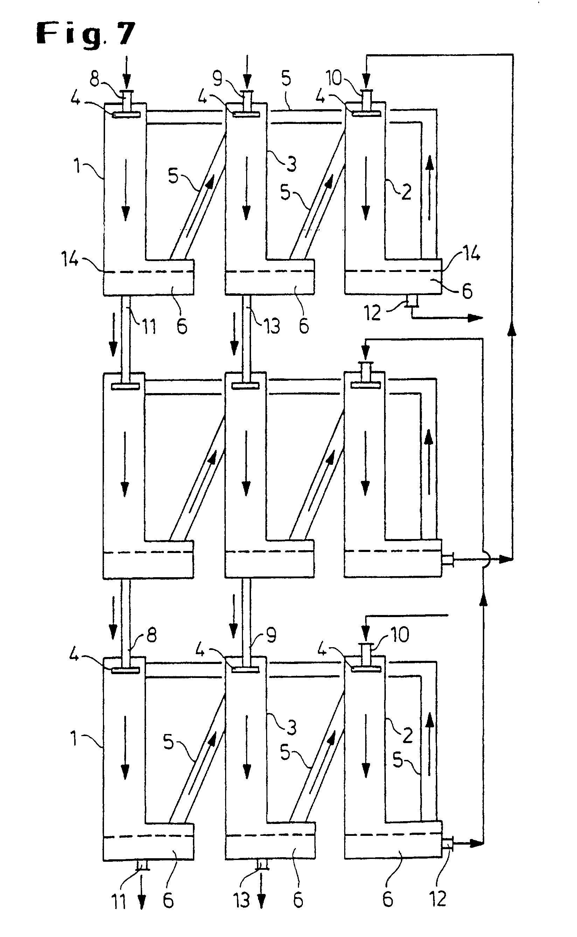

Im Mehrstufen-Extraktor gem. Fig. 7 wiederholen sich die Prozesse der Extraktion, Wäsche und Reextraktion in jeder Stufe. Je nachdem wie die Kammern 1, 2 und 3 miteinander verbunden sind, können verschiedene Varianten des Stofftrennungsprozesses hinsichtlich der Strömungsführung (Gleich- bzw. Gegenstrom) realisiert werden.

## Patentansprüche

1. Mehrphasen-Extraktor mit einer Extraktions-(1) und einer Reextraktionskammer (2), die in ihrem oberen und unteren Teil durch Verbindungskanale (5) unmittelbar verbunden sind, und mit Verteilungsvorrichtungen (4) sowie Stutzen (8,10,11,12) für die Zuführung und Abrührung einer Abgeberphase und einer Aufnehmerphase ausgestattet sind, **dadurch gekennzeichnet, daß** die Extraktions- (1) und die Reextraktionskammer (2) über eine dazwischen geschaltete Waschkammer (3) miteinander in Verbindung stehen.

2. Mehrphasen-Extraktor nach Anspruch 1, **dadurch gekennzeichnet, daß** die Extraktions- (1), die Reextraktions-(2). und die Waschkammer (3) mit Separationszonen (6) ausgestattet sind, welche im Bereich der Eingangsöffnungen der Verbindungskanäle (5) angeordnet sind.

3. Apparat nach Anspruch 1 - 2, **dadurch gekennzeichnet, daß** der obere Teil der Extraktionskammer (1) unmittelbar mit dem oberen Teil der Reextraktionskammer (2) verbunden ist.

4. Apparat nach Anspruch 1 - 2, **dadurch gekennzeichnet, daß** der obere Teil der Extraktionskammer (1) unmittelbar mit dem unteren Teil der Reextraktionskammer (2) verbunden ist.

5. Apparat nach Anspruch 1 - 2, **dadurch gekennzeichnet, daß** der untere Teil der Extraktionskammer (1) unmittelbar mit dem unteren Teil der Reextraktionskammer (2) verbunden ist.

6. Apparat nach Anspruch 1 - 5, **dadurch gekennzeichnet, daß** die Extraktionskammer (1) und die Reextraktionskammer (2) zusammen mit der Waschkammer (3) eine Trennstufe bilden und eine Reihe solcher Trennstufen hintereinander geschaltet sind.

## Claims

1. Multiphase extractor having an extraction chamber (1) and a re-extraction chamber (2) which are directly connected in their upper and lower parts by connecting channels (5) and have distribution devices (4) and connectors (8, 10, 11, 12) for the supply and discharge of a donor phase and an acceptor phase, **characterized in that** the extraction chamber (1) and re-extraction chamber (2) are connected to one another via an intermediate washing chamber (3).

2. Multiphase extractor according to Claim 1, **characterized in that** the extraction chamber (1), the re-extraction chamber (2) and the washing chamber (3) are equipped with separation zones (6) arranged in the region of the inlet openings of the connecting channels (5).

3. Apparatus according to Claims 1 - 2, **characterized in that** the upper part of the extraction chamber (1) is connected directly to the lower part of the re-extraction chamber (2).

4. Apparatus according to Claims 1 - 2, **characterized in that** the upper part of the extraction chamber (1) is connected directly to the lower part of the re-extraction chamber (2).

5. Apparatus according to Claims 1 - 2, **characterized in that** the lower part of the extraction chamber (1) is connected directly to the lower part of the re-extraction chamber (2).

6. Apparatus according to Claims 1 - 5, **characterized in that** the extraction chamber (1) and the re-extraction chamber (2) together with the washing chamber (3) form a single separation stage, and a number of such separation stages are connected in series.

## Revendications

1. Extracteur à phases multiples comportant une chambre d'extraction (1) et une chambre de ré-extraction (2) qui sont directement reliées dans leur partie supérieure et dans leur partie inférieure par des canaux de liaison (5), et comportant des dispositifs de répartition (4) ainsi que des manchons (8, 10, 11, 12) pour l'amenée et l'évacuation d'une phase émettrice et d'une phase réceptrice, **caractérisé en ce que** la chambre d'extraction (1) et la chambre de ré-extraction (2) communiquent l'une avec l'autre via une chambre de lavage interposée.

2. Extracteur à phases multiples selon la revendication 1, **caractérisé en ce que** la chambre d'extraction (1), la chambre de ré-extraction (2) et la chambre de lavage (3) sont équipées de zones de séparation (6) qui sont agencées dans la région des ouvertures d'entrée des canaux de liaison (5).

3. Extracteur selon l'une ou l'autre des revendications 1 et 2, **caractérisé en ce que** la partie supérieure de la chambre d'extraction (1) est reliée directement à la partie supérieure de la chambre de ré-extraction (2).

4. Extracteur selon l'une ou l'autre des revendications 1 et 2, **caractérisé en ce que** la partie supérieure de la chambre d'extraction (1) est reliée directement à la partie inférieure de la chambre de ré-extraction (2).

5. Extracteur selon l'une ou l'autre des revendications 1 et 2, **caractérisé en ce que** la partie inférieure de la chambre d'extraction (1) est reliée directement à la partie inférieure de la chambre de ré-extraction (2).

6. Extracteur selon l'une des revendications 1 à 5, **caractérisé en ce que** la chambre d'extraction (1) et la chambre de ré-extraction (2) forment conjointement avec la chambre de lavage (3) un étage de séparation, et **en ce qu'**une rangée de tels étages de séparation sont agencés les uns derrière les autres.
